# EUROPÄISCHE PATENTANMELDUNG

(11) **EP 4 368 463 A1**
(43) Veröffentlichungstag der Anmeldung: **15.05.2024**
(21) Anmeldenummer: 23195867.9
(22) Anmeldetag: 07.09.2023
(51) Int. Cl.: B60T 13/74, B60T 8/40

(54) **VERFAHREN ZUM STEUERN EINES BREMSSYSTEMS, BREMSSYSTEM SOWIE KRAFTFAHRZEUG**

(30) Priorität: 08.11.2022 DE 102022129424
(71) Anmelder: AUDI AG, 85057 Ingolstadt (DE)
(72) Erfinder: Treffer, Ulrich, 93333 Neustadt a. d. Donau (DE)

(57) **Zusammenfassung**

Die Erfindung betrifft ein Verfahren zum Steuern eines Bremssystems eines Kraftfahrzeugs, wobei das Bremssystem hydraulisch betätigbaren Radbremsen sowie einen Linearaktuator und eine Pumpe als elektrohydraulische Druckerzeugungseinrichtungen umfasst, gemäß dem bei einem Bremsvorgang des Kraftfahrzeugs ein ein Ist-Verhalten des Bremssystems des Kraftfahrzeugs beschreibender Parameter überwacht und mit einem hinterlegten Schwellenwert verglichen wird, wobei im Falle, dass der überwachte Parameter eine definierte Abweichung zum Schwellenwert aufweist, der Linearaktuator und die Pumpe in einen Synchronbetrieb geschaltet werden, indem der Linearaktuator und die Pumpe gleichzeitig betrieben werden und die hydraulisch betätigbaren Radbremsen über den Linearaktuator und die Pumpe mit Bremsdruck beaufschlagt werden. Die Erfindung zeichnet sich dadurch aus, dass als das Ist-Verhalten des Bremssystems des Kraftfahrzeugs beschreibende Parameter ein aktueller Volumenverbrauch des Linearaktuators erfasst wird

## Beschreibung

Die Erfindung betrifft ein Verfahren zum Steuern eines Bremssystems eines Kraftfahrzeugs gemäß der im Oberbegriff des Patentanspruches 1 angegebenen Art, ein Bremssystem gemäß der im Oberbegriff des Patentanspruches 6 angegebenen Art sowie ein Kraftfahrzeug gemäß dem Patentanspruch 9.

Sogenannte elektrohydraulische Bremssysteme zeichnen sich bekanntlich dadurch aus, dass mittels einer entsprechend ausgebildeten Sensorik am Bremspedal ein Bremswunsch des Fahrers erfasst bzw. detektiert wird und dass anhand des erfassten bzw. detektieren Bremswunsches eine elektrohydraulische Druckerzeugungseinrichtung elektronisch angesteuert wird, mittels der der notwendige Bremsdruck in den hydraulischen Radbremsen erzeugt wird. Aufgrund der elektrischen Signalübertragung über Kabel, also "by Wire", werden derartige Bremssysteme auch als ein Brake-by-Wire-Systeme bezeichnet.

Bei autonom fahrenden Fahrzeugen, hier insbesondere autonom fahrende Fahrzeuge ab Level 3, und bei Fahrzeugen mit einem Brake-by-Wire-System ohne eine mechanische/hydraulische Aktuierungsmöglichkeit im Fehlerfall ("true-brake-by-wire"), sind aus sicherheitstechnischen Gründen die elektrohydraulischen Druckerzeugungseinrichtungen der Bremsanlage redundant auszubilden. Hierzu sind die die hydraulischen Bremsen mit Bremsdruck versorgenden Bremskreise über ein eine erste elektrohydraulische Druckerzeugungseinrichtung aufweisendes Primärsystem und ein hierzu redundantes, eine zweite elektrohydraulische Druckerzeugungseinrichtung aufweisendes Sekundärsystem mit Bremsdruck beaufschlagbar.

Als erste Druckerzeugungsreinrichtungen werden in der Regel Linearaktuatoren oder sogenannte Plunger verbaut, die ein fix definiertes Volumen unterbrechungsfrei, d.h. ohne Nachsaugen, verschieben können. Die Auslegung des Bremssystems ist typischerweise so, dass das Volumen des Linearaktuators zur Erreichung des Blockierdruckniveaus ausreichend ist. Der Maximaldruck des Linearaktuators beträgt somit typischerweise zwischen 180-220 bar. Dabei muss mindestens die Bremsflüssigkeitsvolumenaufnahme des Bremssystems (v. a. der Radbremsen), sowie ein definierter Luftanteil in der Bremsflüssigkeit berücksichtigt werden. Zudem haben Öffnungs-Ansteuerungen der Auslassventile an den Radleitungen einen negativen Einfluss auf den Volumenhaushalt. Auch dieser Anteil muss in gewissen Maße berücksichtigt werden. Das Bremssystem wird also zusammenfassend hinsichtlich des Volumens des Linearaktuators heutzutage so ausgelegt, dass nur in spezifischen Fällen, z. B. aufgrund einer Ansteuerung der Auslassventile oder aufgrund einer Leckage, der Linearaktuator nachsaugen muss.

Ist nun bei Brake-By-Wire Bremssystemen zusätzlich zum Linearaktuator eine zweite elektrohydraulische Druckerzeugungseinrichtung, welche im Synchronbetrieb mit dem Linearaktuator angesteuert werden kann, wie z.B. eine Pumpe, verbaut ist, so ist das Bremssystem bislang hinsichtlich des Volumenhaushalts überdimensioniert, da alle oben beschriebenen Effekte mit Auswirkungen auf das benötigte Bremsflüssigkeitsvolumen in der Auslegung des Linearaktuators berücksichtigt werden müssen. D.h. der Linearaktuator ist entsprechend größer dimensioniert, was wiederum ein höheres Bauteilgewicht sowie einen vermehrter Bauraumbedarf bedeutet, und damit mit entsprechenden höheren Kosten verbunden ist.

Ein gattungsgemäßes Verfahren zum Steuern eines Bremssystems eines Kraftfahrzeugs, gemäß dem die hydraulisch betätigbaren Radbremsen über eine in Form eines Linearaktuators ausgebildete erste Druckerzeugungsreinrichtung und eine in Form einer Pumpe ausgebildete zweite Druckerzeugungseinrichtung mit Bremsdruck beaufschlagbar sind, ist in der DE 10 2020 214 972 A1 offenbart. Das Verfahren zeichnet sich dadurch aus, dass ein Bremsanforderungssignal überwacht wird und dass wenn die Änderungsrate des Bremsanforderungssignal größer als ein Schwellwert ist - also im Falle einer schnellen Pedalbetätigung bzw. einer "Panikbremsung" - der Linearaktuator und die Pumpe in einen Synchronbetrieb geschaltet werden, sodass ein angeforderter Bremsdruck besonders schnell erreicht werden kann, wodurch sich der Bremsweg des Kraftfahrzeugs effizient reduzieren lässt.

Der Erfindung liegt die Aufgabe zugrunde ein Verfahren zum Steuern eines Bremssystems eines Kraftfahrzeugs gemäß der im Oberbegriff des Patentanspruches 1 angegebenen Art derart weiterzubilden, dass ein im Bremssystem verbauter Linearaktuator hinsichtlich des unterbrechungsfrei förderbaren Bremsflüssigkeitsvolumens kleiner dimensioniert werden kann.

Diese Aufgabe wird durch die kennzeichnenden Merkmale des Patentanspruches in Verbindung mit seinen Oberbegriffsmerkmalen gelöst.

Die Unteransprüche 2 bis 5 bilden vorteilhafte Weiterbildungen des erfindungsgemäßen Verfahrens.

Gemäß dem Verfahren zum Steuern eines Bremssystems eines Kraftfahrzeugs, umfasst das Bremssystem hydraulisch betätigbare Radbremsen sowie einen Linearaktuator und eine Pumpe als elektrohydraulische Druckerzeugungseinrichtungen. In bekannter Art und Weise wird verfahrensgemäß bei einem Bremsvorgang ein Parameter, welcher ein Ist-Verhalten des Bremssystems beschreibt bzw. charakterisiert, überwacht und mit einem hinterlegten Schwellenwert verglichen und es wird - wenn der überwachte Parameter eine definierte Abweichung zu dem Schwellenwert aufweist - der Linearaktuator und die Pumpe in einen Synchronbetrieb geschaltet, indem der Linearaktuator und die Pumpe gleichzeitig betrieben werden und die hydraulisch betätigbaren Radbremsen über den Linearaktuator und die Pumpe mit Bremsdruck beaufschlagt werden.

Erfindungsgemäß ist nunmehr vorgesehen, dass als Parameter, welcher das Ist-Verhalten des Bremssystems bei einem Bremsvorgang beschreibt, ein aktueller Volumenverbrauch des Linearaktuators verwendet wird.

Da nunmehr erfindungsgemäß der aktuelle Volumenverbrauch des Linearaktuators als Parameter zum Schalten in den Synchronbetrieb verwendet wird, ist in vorteilhafter Weise sichergestellt, dass da - mittels der Pumpe eine bedarfsgerechte Volumenförderung sichergestellt ist - der Linearaktuator kleiner dimensioniert werden kann. Somit ist es nun in vorteilhafter Weise möglich, den Linearaktuator hinsichtlich seines Volumens so auszulegen, dass das Volumen des Linearaktuators ausreichend ist, das notwendige Blockierdruckniveau (in der Regel ca. 100 bar) bei den meisten Bremsvorgängen, z.B. > 90%, sicherzustellen, da in den anderen verbleibenden Fällen, in denen ein höheres Blockierdruckniveau erforderlich ist, die Pumpe unterstützend eingreift, also die Pumpe das zusätzliche Volumen zum Bremsdruckaufbau fördert. Die kleinere Dimensionierung des Linearaktuators hat den Effekt, dass Gewicht eingespart und weniger Bauraum benötigt wird.

Vorzugsweise wird dabei der aktuelle Volumenverbrauch mit einem fest hinterlegten Maximal-Volumenverbrauchswert verglichen, und es wird in den Synchronbetrieb geschaltet, wenn der aktuelle Volumenverbrauch ≥ als der Maximal-Volumenverbrauchswert ist. Weist beispielsweise der Linearaktuator ein Gesamtvolumen von V_{Ges} = 15cm³ auf und wurde als Maximal-Verbrauchswert ein Wert von 11cm³ hinterlegt, schalten Linearaktuator und Pumpe in den Synchronbetrieb, wenn der erfasste aktuelle Volumenverbrauch ≥ 11cm³ ist. Anstelle eines absoluten Maximal-Volumenverbrauchswerts, ist es selbstverständlich auch möglich einen auf das Gesamtvolumen V_{Ges} bezogenen Prozentwert vorzusehen, also Schalten in Synchronbetrieb, wenn der aktuelle Volumenverbrach ≥ x% des Gesamtvolumens V_{Ges}, beispielsweise aktueller Volumenverbrauch ≥ 75% V_{Ges}.

Eine besonders bevorzugte Ausführungsform des erfindungsgemäßen Verfahrens sieht vor, dass neben dem aktuellen Volumenverbrauch des Linearaktuators auch eine daraus resultierende aktuelle Längsbeschleunigung des Kraftfahrzeugs erfasst und der aktuelle Volumenverbrauch mit einem Volumenverbrauchs-Schwellenwert verglichen wird, und dass - wenn der aktuelle Volumenverbrauch ≥ als der Volumenverbrauchs-Schwellenwert ist - in den Synchronbetrieb geschaltet wird, wobei der Volumenverbrauchs-Schwellenwert aus einer Kennlinie entnommen wird, in der die Längsbeschleunigung über dem Volumenverbrauch des Linearaktuators aufgetragen ist. Vorteilhaft an dieser Ausführungsform ist, dass bereits bei niedrigen Verzögerungen identifiziert werden kann, ob das Volumen des Linearaktuators für eine Vollverzögerung ausreichend ist bzw. ob gegebenenfalls eine bedarfsgerechte Ansteuerung der Pumpe erforderlich ist. Mögliche Stützpunkte der Kennlinie könnten z.B. sein, Längsbeschleunigung ≥ -4m/s² ; aktueller Volumenverbrauch ≥ 50% des Gesamtvolumens V_{Ges}, sowie Längsbeschleunigung ≥ - 6m/s² ; aktueller Volumenverbrauch ≥ 70% des Gesamtvolumens V_{Ges}.

Eine weitere Ausführungsform zeichnet sich dadurch aus, dass neben dem aktuellen Volumenverbrauch des Linearaktuators auch ein an den hydraulischen Radbremsen anliegender aktueller Bremsdruck erfasst wird und dass der erfasste aktuelle Bremsdruck mit einem hinterlegten Grenz-Bremsdruck und der aktuelle Volumenverbrauch mit einem hinterlegten Volumenverbrauchs-Grenzwert verglichen wird und dass - wenn der erfasste aktuelle Bremsdruck ≤ als der hinterlegte Grenz-Bremsdruck und der aktuelle Volumenverbrauch ≥ als der hinterlegte Volumenverbrauchs-Grenzwert ist - in den Synchronbetrieb geschaltet wird.

Weist beispielsweise der Linearaktuator wiederum ein Gesamtvolumen von V_{Ges} = 15cm³ auf, als Grenz-Bremsdruck wurde 2bar (=Druck, der notwendig ist, um das Lüftspiel zu überwinden) hinterlegt und der hinterlegte Volumenverbrauchs-Grenzwert V_{Grenz} beträgt z.B. V_{Grenz} = 4cm³, werden der Linearaktuator und Pumpe verfahrensgemäß in den Synchronbetrieb geschaltet, wenn der erfasste aktuelle Volumenverbrauch ≥ 4cm³ und der erfasste Bremsdruck an allen Radbremsen < 2bar ist. Anstelle eines absoluten Volumenverbrauchs-Grenzwert, ist es selbstverständlich auch möglich einen auf das Gesamtvolumen V_{Ges} bezogenen Prozentwert vorzusehen, also beispielsweise Volumenerbrauchs-Grenzwert V_{Grenz} = y% des Gesamtvolumens V_{Ges}, z.B. V_{Grenz} = 25% des Gesamtvolumens V_{Ges}.

Um im Synchronbetrieb eine ausreichende Volumenförderung durch die Pumpe sicherzustellen, ist gemäß einer weiteren bevorzugten Ausführungsform vorgesehen, dass ein die Intensität der Pumpe steuerndes Ansteuersignal aus einer Kennlinie ausgelesen wird, in der die Soll-Pumpenmotordrehzahl über dem Soll-Druckaufbaugradienten oder dem Soll-Volumenstrom der Bremsflüssigkeit aufgetragen ist.

Der Erfindung liegt des Weiteren die Aufgabe zugrunde ein Bremssystem für die Räder eines Kraftfahrzeugs gemäß der im Oberbegriff des Patentanspruches 1 angegebenen Art derart weiterzubilden, so dass das Bremssystem weniger Bauraum benötigt und ein geringeres Gewicht aufweist.

Diese Aufgabe wird durch die kennzeichnenden Merkmale des Patentanspruches 6 in Verbindung mit seinen Oberbegriffsmerkmalen gelöst.

Die Unteransprüche 7 und 8 stellten vorteilhafte Weiterbildungen des erfindungsgemäßen Bremssystems dar.

In bekannter Art und Weise umfasst das Bremssystem den Rädern zugeordnete hydraulisch betätigbare Radbremsen, ein einen Linearaktuator als elektrohydraulische Druckerzeugungseinrichtung aufweisendes Primärsystem zur Versorgung der Radbremsen mit Bremsdruck, sowie ein zum Primärsystem redundantes, eine Pumpe als elektrohydraulische Druckerzeugungseinrichtung aufweisendes Sekundärsystem, welches im Synchronbetrieb mit dem Primärsystem betrieben werden kann, zur Versorgung der Radbremsen mit Bremsdruck. Zudem umfasst das Bremssystem in bekannter Art und Weise einen ein Hydraulikfluid aufweisenden bzw. bevorratenden Bremsflüssigkeitsbehälter, der mit dem Primärsystem und dem Sekundärsystem fluidisch kommunizierend verbunden ist, sowie eine Regel-Steuereinrichtung zum Regeln-/Steuern des Bremssystems.

Das Bremssystem zeichnet sich dadurch aus, dass die Regel-/Steuereinrichtung ausgebildet ist, ein Verfahren nach einem der Ansprüche 1 bis 5 auszuführen.

Die erfindungsgemäße Ausgestaltung des Bremssystem hat den Effekt, dass - wie bereits ausgeführt - aufgrund der erfindungsgemäßen Steuerung, die elektrohydraulische Druckerzeugungseinrichtung des Primärsystems, also der Linearaktuator, kleiner dimensioniert werden kann. Neben einem geringeren Bauteilgewicht hat die kleinere Dimensionierung insbesondere den Vorteil, dass der Linearaktuator kleiner baut, und damit das den Linearaktuator aufweisende Bremssystem weniger Bauraum benötigt.

Bevorzugt ist dabei vorgesehen, dass die Regel-/Steuereinrichtung in Form einer zentralen Regel-/Steuereinheit ausgebildet ist, die eingerichtet ist, sowohl den Linearaktuator des Primärsystems als auch die Pumpe des Sekundärsystems zu regeln/steuern. Dies hat den Vorteil, dass eine besonders bauraumsparende und gewichtsoptimierte Ausgestaltung des Bremssystems ermöglicht ist.

Eine alternative Ausgestaltung zeichnet sich durch eine redundante Ausbildung der Regel-/Steuereinrichtung aus, d.h. es sind zwei Regel-/Steuereinheiten vorgesehen, nämlich eine den Linearaktuator regelnde/steuernde Primär-Regel-Steuereinheit und eine die Pumpe regelnde/steuernde Sekundär-Regel-/Steuereinheit. Hierdurch ist in vorteilhafter Weise eine erhöhte Systemsicherheit gewährleistet.

Der Erfindung liegt des Weiteren die Aufgabe zugrunde ein Kraftfahrzeug, welches ein Bremssystem umfasst, derart weiterzubilden, dass ein verbrauchsoptimiertes Fahren ermöglicht ist.

Diese Aufgabe wird dadurch gelöst, dass das Bremssystem nach einem der Ansprüche 6 bis 8 ausgebildet ist.

Sämtliche Ausführungen zu dem erfindungsgemäßen Verfahren zum Steuern des Bremssystems und zum erfindungsgemäßen Bremssystem lassen sich analog auf das erfindungsgemäße Kraftfahrzeug übertragen, sodass mit diesem auch die zuvor genannten Vorteile, insbesondere eine Gewichtsersparnis und damit ein verbrauchsoptimierter Betrieb des Kraftfahrzeugs, erzielt werden.

## Patentansprüche

1. Verfahren zum Steuern eines Bremssystems eines Kraftfahrzeugs, wobei das Bremssystem hydraulisch betätigbaren Radbremsen sowie einen Linearaktuator und eine Pumpe als elektrohydraulische Druckerzeugungseinrichtungen umfasst, gemäß dem bei einem Bremsvorgang des Kraftfahrzeugs ein ein Ist-Verhalten des Bremssystems des Kraftfahrzeugs beschreibender Parameter überwacht und mit einem hinterlegten Schwellenwert verglichen wird, wobei im Falle, dass der überwachte Parameter eine definierte Abweichung zum Schwellenwert aufweist, der Linearaktuator und die Pumpe in einen Synchronbetrieb geschaltet werden, indem der Linearaktuator und die Pumpe gleichzeitig betrieben werden und die hydraulisch betätigbaren Radbremsen über den Linearaktuator und die Pumpe mit Bremsdruck beaufschlagt werden,
**dadurch gekennzeichnet, dass**
als das Ist-Verhalten des Bremssystems des Kraftfahrzeugs beschreibende Parameter ein aktueller Volumenverbrauch des Linearaktuators erfasst wird.

2. Verfahren nach Anspruch 1,
**dadurch gekennzeichnet, dass**
der aktuelle Volumenverbrauch mit einem fest hinterlegten Maximal-Volumenverbrauchswert verglichen wird, und dass - wenn der aktuelle Volumenverbrauch ≥ als der Maximal-Volumenverbrauchswert ist - in den Synchronbetrieb geschaltet wird.

3. Verfahren nach Anspruch 1 oder 2,
**dadurch gekennzeichnet, dass**
neben dem aktuellen Volumenverbrauch des Linearaktuators auch eine daraus resultierende aktuelle Längsbeschleunigung des Kraftfahrzeugs erfasst wird, und der aktuelle Volumenverbrauch mit einem Volumenverbrauchs-Schwellenwert verglichen wird, und dass - wenn der aktuelle Volumenverbrauch ≥ als der Volumenverbrauchs-Schwellenwert ist - in den Synchronbetrieb geschaltet wird, wobei der Volumenverbrauchs-Schwellenwert aus einer Kennlinie entnommen wird, in der die Längsbeschleunigung über dem Volumenverbrauch des Linearaktuators aufgetragen ist.

4. Verfahren nach einem der Ansprüche 1 bis 3,
**dadurch gekennzeichnet, dass**
neben dem aktuellen Volumenverbrauch des Linearaktuators auch ein an den hydraulischen Radbremsen anliegender aktueller Bremsdruck erfasst wird und dass der erfasste aktuelle Bremsdruck mit einem hinterlegten Grenz-Bremsdruck und der aktuelle Volumenverbrauch mit einem hinterlegten Volumenverbrauchs-Grenzwert verglichen wird und dass - wenn der erfasste aktuelle Bremsdruck ≤ als der hinterlegte Grenz-Bremsdruck und der aktuelle Volumenverbrauch ≥ als der hinterlegte Volumenverbrauchs-Grenzwert ist - in den Synchronbetrieb geschaltet wird.

5. Verfahren nach einem der Ansprüche 1 bis 4,
**dadurch gekennzeichnet, dass**
ein die Pumpe im Synchronbetrieb steuerndes Ansteuersignal aus einem Kennfeld entnommen wird, in dem ein die Pumpe im Synchronbetrieb steuerndes Ansteuersignal aus einer Kennlinie ausgelesen wird, in dem die Soll-Pumpenmotordrehzahl über dem Soll-Druckaufbaugradienten oder dem Soll-Volumenstrom der Bremsflüssigkeit aufgetragen ist.

6. Bremssystem für die Räder eines Kraftfahrzeugs, umfassend
- den Rädern zugeordneten hydraulisch betätigbaren Radbremsen,
- ein einen Linearaktuator als elektrohydraulische Druckerzeugungseinrichtung aufweisendes Primärsystem zur Versorgung der Radbremsen mit Bremsdruck,
- ein zum Primärsystem redundantes, eine Pumpe als elektrohydraulische Druckerzeugeinrichtung aufweisendes Sekundärsystem, welches im Synchronbetrieb mit dem Primärsystem betrieben werden kann, zur Versorgung der Radbremsen mit Bremsdruck,
- einen mit dem Primärsystem und dem Sekundärsystem fluidisch kommunizierenden Bremsflüssigkeitsbehälter, sowie
- eine Regel-/Steuereinrichtung zum Regeln-/Steuern des Bremssystems,
**dadurch gekennzeichnet, dass**
die Regel-/Steuereinrichtung ausgebildet ist ein Verfahren nach einem der Ansprüche 1 bis 5 auszuführen.

7. Bremssystem nach Anspruch 6,
**dadurch gekennzeichnet, dass**
es sich bei der Regel-/Steuereinrichtung um eine zentrale Regel-/Steuereinheit handelt, die eingerichtet ist den Linearaktuators des Primärsystems und die Pumpe des Sekundärsystems zu regeln/steuern.

8. Bremssystem nach Anspruch 6,
**dadurch gekennzeichnet, dass**
die Regel-/Steuereinrichtung redundant ausgebildet ist und eine Primär-Regel-/Steuereinheit und eine Sekundär-Regel-/Steuereinheit umfasst.

9. Kraftfahrzeugs, umfassend ein Bremssystem,
**dadurch gekennzeichnet, dass**
das Bremssystem nach einem der Ansprüche 6 bis 8 ausgebildet ist.
